# EUROPÄISCHE PATENTANMELDUNG

(11) **EP 4 836 279 A1**
(43) Veröffentlichungstag der Anmeldung: **04.11.2026**
(21) Anmeldenummer: 26166284.5
(22) Anmeldetag: 20.03.2026
(51) Int. Cl.: H02M 7/483, H02M 1/00

(54) **KASKADIERTE HILFSSPANNUNGSVERSORGUNGSEINRICHTUNG ZUR SPAN-NUNGSVERSORGUNG EINER ANSTEUERELEKTRONIK EINES MODULS EINES MULTILEVELUMRICHTERS**

(30) Priorität: 29.04.2025 DE 102025116390
(71) Anmelder: Siemens Energy Global GmbH & Co. KG, 81739 München (DE)
(72) Erfinder: Kröppel, Sebastian, 96114 Hirschaid (DE); Maisel, Peter, 90443 Nürnberg (DE); Böhme, Daniel, 90480 Nürnberg (DE)

(57) **Zusammenfassung**

Kaskadierte Hilfsspannungsversorgungseinrichtung zur Spannungsversorgung einer Ansteuerelektronik eines Moduls eines Multilevelumrichters

Die Erfindung betrifft eine Hilfsspannungsversorgungseinrichtung (25) zur Spannungsversorgung einer Ansteuerelektronik (23) eines Moduls (1) eines Multilevelumrichters (3), wobei als Spannungsquelle für die Hilfsspannungsversorgungseinrichtung (25) ein Zwischenkreiskondensator (19) des Moduls (1) vorgesehen ist, wobei die Hilfsspannungsversorgungseinrichtung (25) einen mit dem Zwischenkreiskondensator (19) verbindbaren Eingang (27) und einen Ausgang (29) aufweist, und wobei die durch die Hilfsspannungsversorgungseinrichtung (25) bereitgestellte Hilfsspannung zwischen dem Ausgang (29) und einem Masseanschluss (31) der Hilfsspannungsversorgungseinrichtung (25) abgreifbar ist.

Um eine einfach aufgebaute und leicht skalierbare Hilfsspannungsversorgungseinrichtung (25) bereitzustellen, ist vorgesehen, dass zwischen dem Eingang (27) und dem Ausgang (29) eine Kaskade (33) von Linearreglerstufen (L₁...Lₙ) geschaltet ist, wobei jede Linearreglerstufe (L₁...Lₙ) einen selbstleitenden MOSFET (Metall-Oxid-Halbleiter-Feldeffekttransistor) (M₁...Mₙ) und wenigstens eine Referenzdiode (Z₁...Zₙ) aufweist, die mit der Gate-Elektrode (G) des MOSFETs (M₁...Mₙ) verbunden ist, und wobei die MOSFETs (M₁...Mₙ) aller Linearreglerstufen (L₁...Lₙ) miteinander in Reihe geschaltet sind.

## Beschreibung

Die Erfindung betrifft eine Hilfsspannungsversorgungseinrichtung zur Spannungsversorgung einer Ansteuerelektronik eines Moduls eines Multilevelumrichters, wobei als Spannungsquelle für die Hilfsspannungsversorgungseinrichtung ein Zwischenkreiskondensator des Moduls vorgesehen ist, wobei die Hilfsspannungsversorgungseinrichtung einen Ausgang und einen mit dem Zwischenkreiskondensator verbindbaren Eingang aufweist, und wobei die durch die Hilfsspannungsversorgungseinrichtung bereitgestellte Hilfsspannung zwischen dem Ausgang und einem Masseanschluss der Hilfsspannungsversorgungseinrichtung abgreifbar ist.

Es ist bekannt, die Ansteuerelektronik (Hilfsspannungsversorgung) eines Multilevelumrichters aus dem Zwischenkreiskondensator (Submodulkondensator) des Leistungskreises zu versorgen.

Die Spannung dieses Kondensators ist nicht konstant und bewegt sich im Bereich von z.B. 0 - 6.500 V. Für die Realisierung der Hilfsspannungsversorgung bringt dies besondere Hürden an die Umsetzung. Aufgrund der geforderten niedrigen Anlaufspannung (z.B. < 500 V) resultiert ein breitbandiger Betriebsbereich, der mit herkömmlichen Topologien nicht realisierbar ist.

Für Symmetrisierungszwecke des Multilevelumrichters ist ein hinreichend ausgeprägter resistiver Charakter der Hilfsspannungsversorgung notwendig. Reine Schaltnetzteil-Topologien (negativer Innenwiderstand, Leistungssenke) sind daher nur bedingt einsatzfähig.

Die Implementierung einer Spannungsversorgung mit resistivem Charakter geht häufig mit der Verwendung eines geschalteten Spannungsteilers (ein- oder mehrstufig) einher. Bedingt durch die Anforderung des weiten Eingangsspannungsbereichs werden meist mehrstufig schaltbare Spannungsteiler eingesetzt. Diesem Konzept liegt eine aktive Regelung zugrunde, die in Abhängigkeit der anliegenden Submodulkondensatorspannung und des Energiebedarfs der Baugruppe ausgelegt werden muss.

Beispielsweise kann mit einem schaltbaren Vorwiderstand (aktiv gekühlter Leistungswiderstand) die Modulspannung auf ein Spannungslevel für gewöhnliche Schaltnetzteiltopologien (z.B. Sperrwandler) geteilt und einem Zwischenkreiskondensator zur Verfügung gestellt werden. Auf Basis dieser reduzierten Zwischenkreisspannung kann mit einem DC/DC-Wandler die gewünschte Kleinspannung (z.B. 15 V - 24 V) zur direkten Versorgung der Baugruppen erzeugt werden.

Die bekannten Lösungen sind technisch aufwendig und schlecht skalierbar. Es ist daher die Aufgabe der Erfindung, eine Hilfsspannungsversorgungseinrichtung bereitzustellen, die einen einfachen und leicht skalierbaren Aufbau besitzt.

Diese Aufgabe ist gelöst durch eine Hilfsspannungsversorgungseinrichtung nach Anspruch 1. Vorteilhafte Ausführungsformen sind Gegenstand der Unteransprüche.

Die Erfindung stellt eine kaskadierte Hilfsspannungsversorgungseinrichtung zur Spannungsversorgung einer Ansteuerelektronik eines Moduls eines Multilevelumrichters bereit, die sich dadurch auszeichnet, dass zwischen dem Eingang und dem Ausgang eine Kaskade von Linearreglerstufen geschaltet ist, wobei jede Linearreglerstufe einen selbstleitenden MOSFET (Metall-Oxid-Halbleiter-Feldeffekttransistor) und wenigstens eine Referenzdiode aufweist, die mit der Gate-Elektrode des MOSFETS verbunden ist, und wobei die MOSFETs aller Linearreglerstufen miteinander in Reihe geschaltet sind.

Diese Lösung ermöglicht ein inhärentes Regelverhalten, also eine dynamische stufenlose Spannungsregelung und erlaubt somit den Verzicht auf aktive Regelung. Eine reduzierte Anzahl von Bauteilen gegenüber bisherigen Lösungen führt zu einer besseren FIT-Rate (FIT: Failure In Time) und kann Kostenvorteile bieten.

Durch Serienschaltung weiterer Linearreglerstufen ist die Lösung beliebig an verschiedene Spannungslevel anpassbar. Dadurch ist die erfindungsgemäße Lösung leicht skalierbar.

Im Gegensatz zu bisherigen Lösungen erfolgt auch kein hartes Schalten der Leistungsbauelemente auf hohem Spannungspotential. Dadurch kann auf eine hochohmige bzw. galvanisch getrennte Ansteuerelektronik verzichtet werden.

Zudem wird das Risiko von EMV-Störungen reduziert (EMV: Elektromagnetische Verträglichkeit). Darüber hinaus besitzt die kaskadierte Hilfsspannungsversorgungseinrichtung über einen definierten Betriebsbereich einen linearen rein resistiven Innenwiderstand.

Der lineare Innenwiderstand verspricht Vorteile in der Regelungsalgorithmik eines Multilevelumrichters, weil dadurch eine präzisere Symmetrisierung der Submodulkondensatoren über den gesamten definierten Betriebsbereich möglich ist.

Durch die Charakteristik des Innenwiderstand ist die Verlustleistung der Hilfsspannungsversorgungseinrichtung linear und im Vergleich zur bisherigen Lösung ist die Verlustleistung geringer.

Eine geringere Verlustleistung bedeutet eine verbesserte Verlustbewertung des Multilevelumrichters und spart dadurch Kosten. Mit steigender Betriebsspannung steigt der Effizienzvorteil im Vergleich zur bisherigen Lösung sogar noch.

Die selbstleitenden MOSFETs sind in einem spannungsfreien Zustand leitend und gehen bei einer ausreichend negativen Gate-Source-Spannung in einen teilweise leitenden Zustand über. Die Module des Multilevelumrichters werden auch als Submodule oder Powermodule bezeichnet.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

Vorzugsweise sind die Referenzdioden Zenerdioden, deren Durchbruchspannungen die Sollspannungen der jeweiligen Linearreglerstufen definieren. Die Durchbruchspannung der wenigstens einen Referenzdiode kann die Gate-Source-Spannung des dazugehörigen MOSFETs steuern.

Die Ausgangsspannung einer Linearreglerstufe dient bevorzugt als Referenz für die nachfolgende Linearreglerstufe.

Besonders bevorzugt ist der MOSFET der ersten Linearreglerstufe an seiner Source-Elektrode mit dem Ausgang der Hilfsspannungsversorgungseinrichtung verbunden. Dabei ist vorzugsweise genau eine Referenzdiode zwischen der Gate-Elektrode des MOSFETS und dem Masseanschluss der Hilfsspannungsversorgungseinrichtung geschaltet. Alternativ dazu kann anstelle der genau einen Diode eine Diodenanordnung vorgesehen sein, die aus einer Reihenschaltung einer Mehrzahl von Dioden zusammengesetzt ist.

Die Linearreglerstufen sind vorzugsweise in der folgenden Reihenfolge angeordnet: Die erste Linearreglerstufe (Linearreglerstufe 1) ist, wie oben beschrieben, über die Source-Elektrode ihres MOSFETs mit dem Ausgang der Hilfsspannungsversorgungseinrichtung verbunden. Von dort aus steigt die Nummer der Linearreglerstufen in Richtung Eingang an.

Gemäß einer vorteilhaften Ausführungsform der Hilfsspannungsversorgungseinrichtung kann bei jeder Linearreglerstufe größer als 1 der jeweilige MOSFET über seine Source-Elektrode mit der Drain-Elektrode des MOSFETs der nächstniedrigeren Linearreglerstufe verbunden sein. Die Ausgangsspannung der Linearreglerstufe der nächstniedrigeren Linearreglerstufe dient dabei als Referenz für die zuerst genannte Linearreglerstufe.

Vorzugsweise ist bei jeder Linearreglerstufe größer als 1 genau eine Referenzdiode zwischen der Gate-Elektrode des MOSFETS dieser Linearreglerstufe und der Source-Elektrode des MOSFETS der nächstniedrigeren Linearreglerstufe geschaltet.

Gemäß einer alternativen Ausgestaltung kann bei jeder Linearreglerstufe größer als 1 zwischen der Gate-Elektrode des MOSFETS dieser Linearreglerstufe und dem Masseanschluss der Hilfsspannungsversorgungseinrichtung eine Mehrzahl von Referenzdioden in Reihenschaltung geschaltet ist. Die Anzahl der Referenzdioden in Reihenschaltung kann dabei mit zunehmender Linearreglerstufe zunehmen. Beispielsweise kann die zweite Linearreglerstufe zwei (oder mehr) Referenzdioden aufweisen, die Linearreglerstufe 3 kann drei (oder mehr) Referenzdioden aufweisen, usw.

Um eine Strombegrenzung zu erhalten, kann zwischen zwei benachbarten MOSFETS der Reihenschaltung jeweils ein Serienwiderstand geschaltet sein. Zudem kann ein Serienwiderstand zwischen dem MOSFET der Linearreglerstufe 1 und dem Ausgang geschaltet sein. Über die Rückkopplung des Serienwiderstands auf das Gate des MOSFETS wird die Strombegrenzungsregelung umgesetzt.

Um die Skalierbarkeit und den Aufbau der Hilfsspannungsversorgungseinrichtung weiter zu verbessern, können der MOSFET und die wenigstens eine Referenzdiode derselben Linearreglerstufe zu einer Baueinheit, also einem Linearreglermodul, zusammengefasst sein.

Die Erfindung betrifft auch ein Modul für einen modularen Multilevelumrichter, wobei das Modul einen Zwischenkreiskondensator und Schaltbaugruppen, die in Halbbrücken-, Vollbrücken- oder einer anderen Schaltanordnung miteinander verschaltet sind, wenigstens eine Ansteuerelektronik zur Steuerung der Schaltbaugruppen und wenigstens eine kaskadierte Hilfsspannungsversorgungseinrichtung nach einem der vorgenannten Ansprüche umfasst, wobei die kaskadierte Hilfsspannungsversorgungseinrichtung zur Versorgung mit Spannung mit dem Zwischenkreiskondensator verbunden und ausgestaltet ist, eine Hilfsspannung für die Ansteuerelektronik bereitzustellen. Die Erfindung betrifft auch einen modularen Multilevelumrichter mit wenigstens einem solchen Modul. Die kaskadierte Hilfsspannungsversorgungseinrichtung des vorgenannten Moduls ist vorzugsweise aus einer Mehrzahl von Linearreglermodulen zusammengesetzt.

Zur weiteren Erläuterung der Erfindung wird im nachfolgenden Teil der Beschreibung auf Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Für Elemente mit gleichem Aufbau und/oder gleicher Funktion werden stets dieselben Bezugszeichen verwendet.

Es zeigen:
- Fig. 1: eine schematische beispielhafte Darstellung eines Moduls eines Multilevelumrichters;
- Figs. 2 bis 4: vorteilhafte Ausführungsformen von erfindungsgemäßen Hilfsspannungsversorgungseinrichtungen;
- Fig. 5: einen Vergleich der Innenwiderstände einer erfindungsgemäßen Hilfsspannungsversorgungseinrichtung mit einem herkömmlichen geschalteten Vorwiderstand; und
- Fig. 6: einen Vergleich der Verlustleistung einer erfindungsgemäßen Hilfsspannungsversorgungseinrichtung mit einem herkömmlichen geschalteten Vorwiderstand.

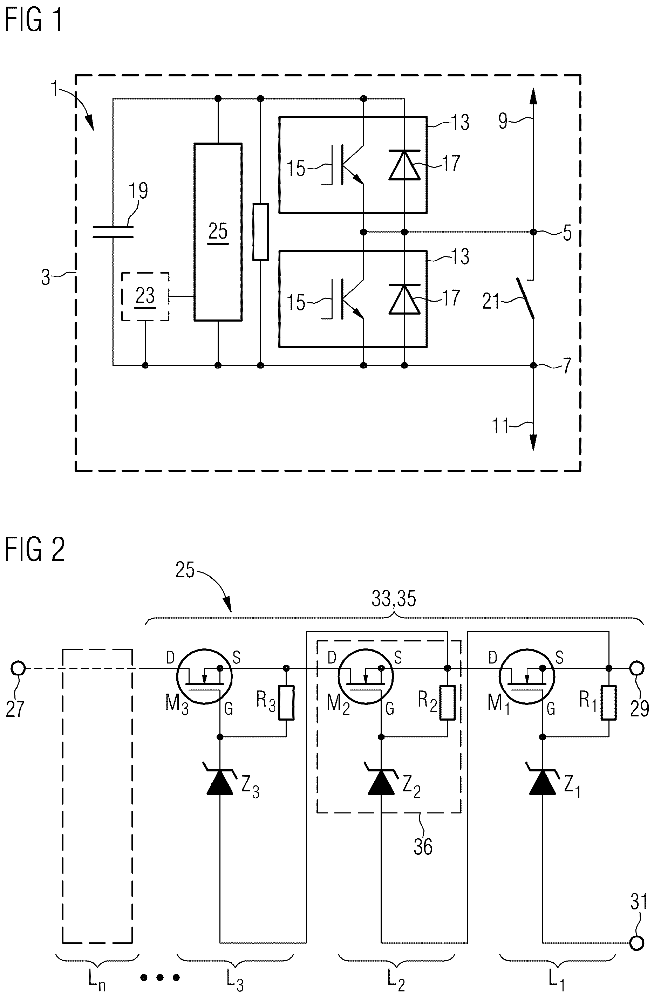

Im Folgenden ist zunächst ein Modul 1 für einen modularen Multilevelumrichter 3 mit Bezug auf Fig. 1 beschrieben. Der modulare Multilevelumrichter 3 ist nur gestrichelt angedeutet und weist in der Regel eine Mehrzahl gleichartiger Module 1 auf. Das Modul 1 kann auch als Submodul oder Powermodul bezeichnet werden.

Das Modul 1 weist zwei Modulanschlüsse 5 und 7 auf, über die es in einer Reihenschaltung mit weiteren Modulen (nicht dargestellt) verbunden sein kann. Die Pfeile 9 und 11 in Fig. 1 weisen zu benachbarten Modulen dieser Reihenschaltung.

Das Modul 1 weist zwei, vorzugsweise identisch aufgebaute, Schaltbaugruppen 13 auf, die mit den Modulanschlüssen 5 und 7 verbunden sind. In dem beispielhaft dargestellten Modul 1 sind die Schaltbaugruppen 13 in einer Halbbrückenschaltung miteinander verschaltet.

Alternativ dazu können auch weitere Schaltbaugruppen 13 vorhanden sein, um beispielsweise eine Vollbrückenschaltung zu ermöglichen. Darüber hinaus sind, je nach Anwendungsfall, auch andere Schaltungsarten möglich.

Jede Schaltbaugruppe 13 weist einen Leistungshalbleiterschalter 15 und eine dazu antiparallel geschaltete Diode 17 auf. Jeder Leistungshalbleiterschalter 15 ist vorzugsweise durch einen Bipolartransistor mit isolierter Gate-Elektrode (IGBT) gebildet.

Das Modul 1 weist darüber hinaus einen Zwischenkreiskondensator 19 als Energiespeicher auf.

Um das Submodul 1 insbesondere in einem Fehlerfall zu überbrücken, ist vorzugsweise ein Überbrückungsschalter 21, auch Bypassschalter genannt, zwischen die beiden Submodulanschlüsse 5 und 7 geschaltet.

Zur Ansteuerung der Schaltbaugruppen 13 umfasst das Modul 1 eine Ansteuerelektronik 23, die in Fig. 1 gestrichelt angedeutet ist. Um die Ansteuerelektronik 23 mit Spannung zu versorgen, ist eine Hilfsspannungsversorgungseinrichtung 25 vorgesehen, die wiederum ihre Spannung aus dem Zwischenkreiskondensator 19 bezieht.

Im Folgenden ist eine erste vorteilhafte Ausführungsform einer erfindungsgemäßen kaskadierten Hilfsspannungsversorgungseinrichtung 25 mit Bezug auf Fig. 2 beschrieben. Diese kann als Hilfsspannungsversorgungseinrichtung 25 in dem mit Bezug auf Fig. 1 beschriebenen Modul 1 eingesetzt werden.

Die Hilfsspannungsversorgungseinrichtung 25 weist einen mit dem Zwischenkreiskondensator 19 verbindbaren Eingang 27, einen Ausgang 29 und einen Masseanschluss 31 auf. Zwischen dem Ausgang 29 und dem Masseanschluss 31 kann die durch die Hilfsspannungsversorgungseinrichtung 25 bereitgestellte Hilfsspannung für die Ansteuerelektronik 23 abgegriffen werden.

Zwischen dem Eingang 27 und dem Ausgang 29 ist eine Kaskade 33 von Linearreglerstufen L₁...Lₙ geschaltet. Die Reihenfolge der Linearreglerstufen L₁...Lₙ verläuft vom Eingang in Richtung auf den Ausgang. Das heißt, Linearreglerstufe L₁ liegt dem Ausgang am nächsten.

Die dem Eingang am nächsten gelegene Linearreglerstufe Lₙ ist in Fig. 2 lediglich gestrichelt angedeutet. Die Hilfsspannungsversorgungseinrichtung 25 kann als ein aus der Kaskade 33 der Linearreglerstufen L₁...Lₙ aufgebauter Linearregler 35 betrachtet werden.

Jede Linearreglerstufe L₁...Lₙ weist einen selbstleitenden MOSFET (Metall-Oxid-Halbleiter-Feldeffekttransistor) M₁...Mₙ und wenigstens eine Referenzdiode Z₁...Zₙ auf. Die Referenzdiode Z₁...Zₙ einer Linearreglerstufe L₁...Lₙ ist mit der Gate-Elektrode des MOSFETS M₁...Mₙ derselben Linearreglerstufe L₁...Lₙ verbunden. Die MOSFETs M₁...Mₙ der Linearreglerstufen L₁...Lₙ sind miteinander in Reihe geschaltet.

Die selbstleitenden MOSFETs M₁...Mₙ sind in einem spannungsfreien Zustand leitend und gehen bei anliegender Spannung in einen teilweise leitenden Zustand über. Die Elektroden der MOSFETs M₁...Mₙ sind in Fig. 2 mit den typischen Zeichen gekennzeichnet: G: Gate-Elektrode, D: Drain-Elektrode und S: Source-Elektrode.

Die Referenzdioden Z₁...Zₙ sind vorzugsweise Zenerdioden, deren Durchbruchspannungen die Sollspannungen der jeweiligen Linearreglerstufen L₁...Lₙ definieren. Dazu steuert die Durchbruchspannung einer Referenzdiode Z₁...Zₙ die Gate-Source-Spannung des dazugehörigen MOSFETS M₁...Mₙ.

Die Ausgangsspannung einer Linearreglerstufe L₁...Lₙ dient dabei als Referenz für die nachfolgende Linearreglerstufe L₁...Lₙ.

Bei jeder Linearreglerstufe L₁...Lₙ größer als 1, also bei den Linearreglerstufen L₂...Lₙ, ist der jeweilige MOSFET M₂...Mₙ über seine Source-Elektrode S mit der Drain-Elektrode D des MOSFETs M₁...Mₙ₋₁ der nächstniedrigeren Stufe verbunden.

Bei der dargestellten Ausführungsform ist bei jeder Linearreglerstufe L₁...Lₙ größer als 1, also bei den Linearreglerstufen L₂...Lₙ, genau eine Referenzdiode Z₂...Zₙ zwischen der Gate-Elektrode G des MOSFETS M₂...Mₙ dieser Linearreglerstufe und der Source-Elektrode S des MOSFETs M₁...Mₙ₋₁ der nächstniedrigeren Stufe geschaltet.

Wenigstens einer der MOSFETs M₁...Mₙ und die Referenzdiode Z₁...Zₙ derselben Linearreglerstufe L₁...Lₙ können zu einer Baueinheit 36 (Linearreglermodul) zusammengefasst sein. Dies ist in Fig. 2 beispielhaft für die Linearreglerstufe L₂ angedeutet.

Im Folgenden ist die Funktionsweise der in Fig. 2 dargestellten Ausführungsform kurz erläutert.

Im spannungsfreien Zustand ist die Reihenschaltung der MOSFETs M₁...Mₙ leitfähig. Mit zunehmender Spannung fällt an den MOSFETs M₁...Mₙ, nacheinander, beginnend mit dem MOSFET M₁ am Ausgang 29 der Reihenschaltung die Differenz zwischen der Eingangsspannung und der gewünschten Ausgangsspannung ab, wenn diese vom leitfähigen in den nur noch teilweise leitfähigen Betrieb (resistiver Charakter der Halbleiter) übergehen. Die Spannung am Ausgang 29 der Reihenschaltung ist aktiv einem einstellbaren Zielwert stabilisiert.

Die Spannung am Ausgang 29 der Kaskade 33 folgt der Eingangsspannung bis zum Erreichen der Sollspannung der Linearreglerstufe L₁. Die Sollspannung der Linearreglerstufe L₁ entspricht der Durchbruchspannung (Referenzspannung) der Referenzdiode Z₁.

Erreicht die Ausgangsspannung den Wert der Durchbruchspannung wird ein Spannungsabfall über R₁, bedingt durch den Stromfluss über die Referenzdiode Z₁, erzeugt. Der Spannungsabfall über R₁ führt zu einer negativen Gate-Source-Spannung und steuert dadurch die Leitfähigkeit des Drain-Source Kanals des MOSFETs M₁.

Für die Linearreglerstufe L₂ dient die durch Linearreglerstufe L₁ geregelte Spannung als Bezugsgröße. Die Referenzdiode Z₂ der Linearreglerstufe L₂ stützt sich auf das Source Potential des MOSFETs M₁. Die Linearreglerstufe L₂ ist so lange vollständig leitfähig bis die an der Source-Elektrode S des MOSFETs M₂ anliegende Spannung gleich der Ausgangsspannung plus der Durchbruchspannung der Referenzdiode Z₂ ist.

Die Realisierung der Eigenversorgung in Form eines Linearreglers 35 führt zu einem inhärenten Regelverhalten (dynamische stufenlose Spannungsregelung) der Ausgangsspannung. Dadurch kann auf den Einsatz von zusätzlichen Regelungskomponenten (erzwungenen Regelungsalgorithmik) verzichtet werden.

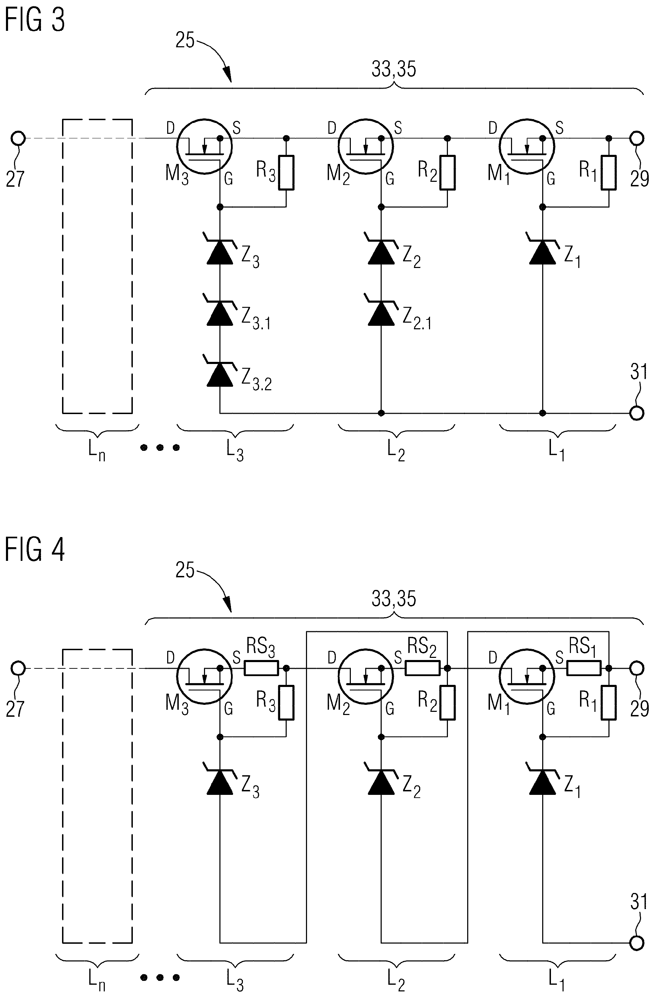

Im Folgenden ist mit Bezug auf Fig. 3 eine weitere vorteilhafte Ausführungsform der erfindungsgemäßen Hilfsspannungsversorgungseinrichtung 25 beschrieben. Dabei wird der Kürze halber nur auf die Unterschiede zu der mit Bezug auf Fig. 2 beschriebenen Ausführungsform eingegangen.

Die zweite Ausführungsform unterscheidet sich von der ersten Ausführungsform durch den Bezugspunkt der Referenzdioden Z₁...Zₙ der einzelnen Linearreglerstufen L₁...Lₙ. Während sich die Referenzdioden Z₁...Zₙ bei der ersten Ausführungsform immer auf das Sourcepotential der vorherigen Linearreglerstufe L₁...Lₙ beziehen, wird in bei der zweiten Ausführungsform der Masseanschluss 31 als absoluter Bezugspunkt gewählt.

Dies hat zur Folge, dass die Anzahl der Referenzdioden Z₁...Zₙ je Linearreglerstufe L₁...Lₙ ansteigt, um die gewünschte Sollspannung zu erreichen. So weist die erste Linearreglerstufe L₁ eine Referenzdiode Z₁ auf. Die Linearreglerstufe L₂ weist die zwei Referenzdioden Z₂ und Z_{2.1} auf. Die Linearreglerstufe L₃ weist drei Referenzdioden Z₃, Z_{3.1} und Z_{3.2} auf, usw.

Die Linearreglerstufe L₂ ist so lange vollständig leitfähig bis die an der Source-Elektrode S des MOSFETs M₂ anliegende Spannung gleich der Summe der Durchbruchspannungen der Referenzdioden Z₂ und Z_{2.1} ist.

Fig. 4 zeigt eine dritte vorteilhafte Ausführungsform einer erfindungsgemäßen Hilfsspannungsversorgungseinrichtung 25, die im Folgenden beschrieben ist. Auch hier wird, der Kürze halber, nur auf die Unterschiede zur ersten, mit Bezug auf die Fig. 2 beschriebenen, Ausführungsform eingegangen.

Die dritte Ausführungsform der Hilfsspannungsversorgungseinrichtung 25 ist, ergänzend zur ersten Ausführungsform um jeweils einen Serienwiderstand RS₁...RSₙ je Linearreglerstufe L₁...Lₙ erweitert. Mithilfe dieser Serienwiderstände RS₁...RSₙ wird die Funktionalität einer Strombegrenzung realisiert.

Der maximal fließende Strom entspricht dem Quotienten aus Gate-Source Threshold-Spannung des jeweiligen MOSFETs M₁...Mₙ und dem Wert des dazugehörigen Serienwiderstands RS₁...RSₙ. Es handelt sich somit prinzipiell um eine Spannungsregelung mit statischer Strombegrenzung.

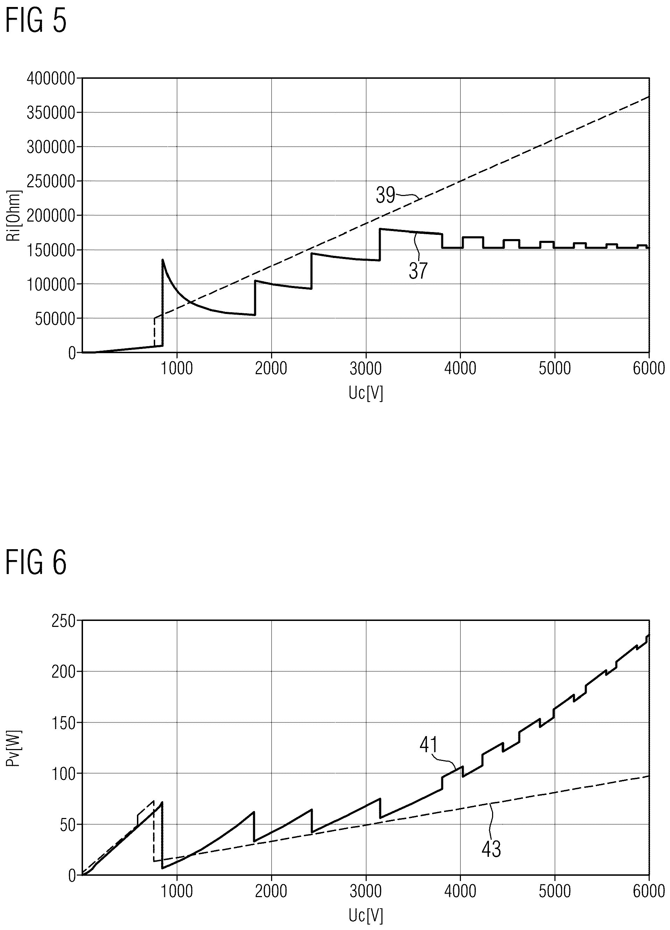

Fig. 5 zeigt einen Vergleich der Innenwiderstände einer erfindungsgemäßen Hilfsspannungsversorgungseinrichtung 25 mit einem herkömmlichen geschalteten Vorwiderstand.

Dabei zeigt die mit 37 gekennzeichnete Kurve den Innenwiderstand eines herkömmlichen geschalteten Vorwiderstands und die mit 39 gekennzeichnete Kurve den Innenwiderstand einer erfindungsgemäßen kaskadierten Hilfsspannungsversorgungseinrichtung 25.

Die Ausgangslast beträgt bei beiden Varianten konstant 10 Watt ab einer Ausgangsspannung von 600 V. Die kaskadierte Hilfsspannungsversorgungseinrichtung 25 besitzt über den gesamten definierten Betriebsbereich einen linear steigenden Innenwiderstand.

Fig. 6 zeigt einen Vergleich der Verlustleistung einer erfindungsgemäßen Hilfsspannungsversorgungseinrichtung 25 mit einem herkömmlichen geschalteten Vorwiderstand.

Dabei zeigt die mit 41 gekennzeichnete Kurve die Verlustleistung eines herkömmlichen geschalteten Vorwiderstands und die mit 43 gekennzeichnete Kurve die Verlustleistung einer erfindungsgemäßen kaskadierten Hilfsspannungsversorgungseinrichtung 25.

Die Ausgangslast beträgt bei beiden Varianten konstant 10 Watt ab einer Ausgangsspannung von 600 V. Die kaskadierte Hilfsspannungsversorgungseinrichtung 25 besitzt im typischen Betriebsbereich und der darüber liegenden Betriebsspannung einen deutlich besseren Wirkungsgrad.

### Bezugszeichen

- 1: Modul
- 3: Multilevelumrichter
- 5, 7: Modulabschlüsse
- 9, 11: Pfeile
- 13: Schaltbaugruppe
- 15: Leistungshalbleiterschalter
- 17: Diode
- 19: Zwischenkreiskondensator
- 21: Überbrückungsschalter
- 23: Ansteuerelektronik
- 25: Hilfsspannungsversorgungseinrichtung
- 27: Eingang
- 29: Ausgang
- 31: Masseanschluss
- 33: Kaskade
- 35: Linearregler
- 36: Baueinheit
- 37: Innenwiderstand eines geschalteten Vorwiderstands
- 39: Innenwiderstand einer kaskadierten Hilfsspannungsversorgungseinrichtung
- 41: Verlustleistung eines geschalteten Vorwiderstands
- 43: Verlustleistung einer kaskadierten Hilfsspannungsversorgungseinrichtung
- Z₁...Zₙ: Referenzdioden
- M₁...Mₙ: MOSFETs
- R₁...Rₙ: Widerstände
- L₁...Lₙ: Linearreglerstufen
- RS₁...RSₙ: Serienwiderstände
- G: Gate-Elektrode
- D: Drain-Elektrode
- S: Source-Elektrode

## Patentansprüche

1. Hilfsspannungsversorgungseinrichtung (25) zur Spannungsversorgung einer Ansteuerelektronik (23) eines Moduls (1) eines Multilevelumrichters (3), wobei als Spannungsquelle für die Hilfsspannungsversorgungseinrichtung (25) ein Zwischenkreiskondensator (19) des Moduls (1) vorgesehen ist, wobei die Hilfsspannungsversorgungseinrichtung (25) einen Ausgang (29) und einen mit dem Zwischenkreiskondensator (19) verbindbaren Eingang (27) aufweist, und wobei die durch die Hilfsspannungsversorgungseinrichtung (25) bereitgestellte Hilfsspannung zwischen dem Ausgang (29) und einem Masseanschluss (31) der Hilfsspannungsversorgungseinrichtung (25) abgreifbar ist, **dadurch gekennzeichnet, dass** zwischen dem Eingang (27) und dem Ausgang (29) eine Kaskade (33) von Linearreglerstufen (L₁...Lₙ) geschaltet ist, wobei jede Linearreglerstufe (L₁...Lₙ) einen selbstleitenden MOSFET (Metall-Oxid-Halbleiter-Feldeffekttransistor) (M₁...Mₙ) und wenigstens eine Referenzdiode (Z₁...Zₙ) aufweist, die mit der Gate-Elektrode (G) des MOSFETs (M₁...Mₙ) verbunden ist, und wobei die MOSFETs (M₁...Mₙ) aller Linearreglerstufen (L₁...Lₙ) miteinander in Reihe geschaltet sind.

2. Hilfsspannungsversorgungseinrichtung (25) nach Anspruch 1, **dadurch gekennzeichnet, dass** die Referenzdioden (Z₁...Zₙ) Zenerdioden sind, deren Durchbruchspannungen die Sollspannungen der jeweiligen Linearreglerstufen (L₁...Lₙ) definieren.

3. Hilfsspannungsversorgungseinrichtung (25) nach einem der Ansprüche 1 oder 2, **dadurch gekennzeichnet, dass** die Ausgangsspannung einer Linearreglerstufe (L₁...Lₙ) als Referenz für die nachfolgende Linearreglerstufe (L₁...Lₙ) dient.

4. Hilfsspannungsversorgungseinrichtung (25) nach einem der Ansprüche 1 bis 3, **dadurch gekennzeichnet, dass** der MOSFET (M₁...Mₙ) der ersten Linearreglerstufe (L₁...Lₙ) an seiner Source-Elektrode mit dem Ausgang der Hilfsspannungsversorgungseinrichtung (25) verbunden und genau eine Referenzdiode (Z₁...Zₙ) zwischen der Gate-Elektrode (G) des MOSFETS (M₁...Mₙ) und dem Masseanschluss (31) der Hilfsspannungsversorgungseinrichtung (25) geschaltet ist.

5. Hilfsspannungsversorgungseinrichtung (25) nach Anspruch 4, **dadurch gekennzeichnet, dass** bei jeder Linearreglerstufe (L₂...Lₙ) größer als 1 der jeweilige MOSFET (M₂...Mₙ) über seine Source-Elektrode (S) mit der Drain-Elektrode (D) des MOSFETs (M₁...Mₙ₋₁) der nächstniedrigeren Linearreglerstufe (L₁...Lₙ₋₁) verbunden ist.

6. Hilfsspannungsversorgungseinrichtung (25) nach Anspruch 5, **dadurch gekennzeichnet, dass** bei jeder Linearreglerstufe (L₂...Lₙ) größer als 1 die genau eine Referenzdiode (Z₂...Zₙ) zwischen der Gate-Elektrode (G) des MOSFETS (M₂...Mₙ) dieser Linearreglerstufe (L₂...Lₙ) und der Source-Elektrode (S) des MOSFETS (M₁...Mₙ₋₁) der nächstniedrigeren Linearreglerstufe (L₁...Lₙ₋₁) geschaltet ist.

7. Hilfsspannungsversorgungseinrichtung (25) nach Anspruch 5, **dadurch gekennzeichnet, dass** bei jeder Linearreglerstufe (L₂...Lₙ) größer als 1 zwischen der Gate-Elektrode (G) des MOSFETS (M₂...Mₙ) dieser Linearreglerstufe (L₂...Lₙ) und dem Masseanschluss (31) eine Mehrzahl von Referenzdioden (Z₂...Zₙ) in Reihenschaltung geschaltet ist.

8. Hilfsspannungsversorgungseinrichtung (25) nach Anspruch 7, **dadurch gekennzeichnet, dass** die Anzahl der in Reihe geschalteten Referenzdioden (Z₁...Zₙ) mit zunehmender Linearreglerstufe (L₁...Lₙ) zunimmt.

9. Hilfsspannungsversorgungseinrichtung (25) nach einem der Ansprüche 1 bis 8, **dadurch gekennzeichnet, dass** zwischen zwei benachbarten MOSFETS (M₁...Mₙ) der Reihenschaltung jeweils ein Serienwiderstand (SR₁...SRₙ) zur Strombegrenzung geschaltet ist.

10. Hilfsspannungsversorgungseinrichtung (25) nach einem der Ansprüche 1 bis 9, **dadurch gekennzeichnet, dass** der MOSFET (M₁...Mₙ) und die wenigstens eine Referenzdiode (Z₁...Zₙ) derselben Linearreglerstufe (L₁...Lₙ) zu einer Baueinheit (36) zusammengefasst sind.

11. Modul (1) für einen modularen Multilevelumrichter (3), das Modul (1) umfassend einen Zwischenkreiskondensator (19) und Schaltbaugruppen (13), die in Halbbrücken-, Vollbrücken- oder einer anderen Schaltanordnung miteinander verschaltet sind, wenigstens eine Ansteuerelektronik (23) zur Steuerung der Schaltbaugruppen (13) und wenigstens eine kaskadierte Hilfsspannungsversorgungseinrichtung (25) nach einem der vorgenannten Ansprüche, wobei die kaskadierte Hilfsspannungsversorgungseinrichtung (25) zur Versorgung mit Spannung mit dem Zwischenkreiskondensator (19) verbunden ist und ausgestaltet ist, eine Hilfsspannung für die Ansteuerelektronik (23) bereitzustellen.

12. Modularer Multilevelumrichter (3) mit wenigstens einem Modul (1) nach Anspruch 11.
